# EUROPÄISCHE PATENTSCHRIFT

(11) **EP 1 620 670 B1**
(45) Veröffentlichungstag und Bekanntmachung des Hinweises auf die Patenterteilung: **03.12.2008**
(21) Anmeldenummer: 04730501.6
(22) Anmeldetag: 30.04.2004
(51) Int. Cl.: F16L 3/237, F16L 3/223, H02G 3/32

(54) **HALTERUNG FÜR LANGGESTRECKTE GEGENSTÄNDE**
FIXTURE FOR ELONGATE OBJECTS
SUPPORT POUR OBJETS ALLONGES

(30) Priorität: 02.05.2003 EP 03010053
(43) Veröffentlichungstag der Anmeldung: 01.02.2006
(73) Patentinhaber: Hellermann Tyton GmbH, 25436 Tornesch (DE)
(72) Erfinder: WIEN, Thomas, 22869 Schenefeld (DE); STOCKER, Konrad, 72401 Haigerloch (DE)
(74) Vertreter: Glawe, Delfs, Moll
(86) Internationale Anmeldenummer: PCT/EP2004/004599
(87) Internationale Veröffentlichungsnummer: WO 2004/097280

(56) Entgegenhaltungen:
- EP-A- 0 579 352
- EP-A- 0 625 662
- GB-A- 1 217 182
- GB-A- 1 299 592
- US-A- 4 936 530
- US-A- 5 271 588

## Beschreibung

Die Erfindung betrifft eine Halterung für langgestreckte Gegenstände, die einen vorbestimmten Durchmesser aufweisen, beispielsweise Rohre. Diese sollen stabil, schwingungssicher und in definierter Lage gehalten werden. Die Halterung soll leicht und sicher montierbar sein.

Bei einer bekannten Halterung (GB-B-1 299 592), der der Bildung des Oberbegriffs des Anspruchs 1 zugrunde liegt, bildet ein unterer Halterungsteil eine Mulde für die Aufnahme des Gegenstands. Neben der Mulde enthält er eine Bohrung, in welcher ein Zapfen geführt ist, der mit dem zweiten Halterungsteil verbunden ist. Dieser hat einen flachen Flügel, der im fertig montierten Zustand über der Mulde liegt und mit einem Nasenvorsprung unter einen entsprechend geformten Haken des unteren Halteteils faßt. Die Nase und der Haken bilden ein Verschlußgliederpaar, das die beiden Halterungsteile in der montierten Stellung sichert. Dadurch, daß auf der einen Seite der Mulde die die beiden Halterungsteile verbindende Kupplung und auf der anderen Seite das Verschlußgliederpaar vorgesehen ist, sind der Raum- und Materialbedarf der bekannten Vorrichtung verhältnismäßig groß. Auch verlangt die Montage viel Aufmerksamkeit, weil die Relativbewegung der beiden Halterungsteile zueinander und der Verriegelungsvorgang an den Verschlußorganen aufeinander abgestimmt werden müssen.

Ferner sind Halterungen bekannt, bei denen die beiden Halterungsteile durch besondere Schrauben zusammengezogen werden (US-A-5 271 588, EP-A-579 352, EP-A-625 662), was sowohl in der Herstellung als auch in der Anwendung aufwendig ist. Schließlich ist eine Halterung bekannt (US-A-4 936 530), bei welcher am oberen Halterungsteil ein selbstklemmender Zapfen angeordnet ist, der frei durch eine Öffnung des unteren Halterungsteils geführt ist und sich in einer Bohrung einer Tragstruktur verankert. Die Verbindung der Halterungsteile ist demnach abhängig von dem Zustandekommen einer fremden Funktion, nämlich der Verankerung des Zapfens in der Tragstruktur. Dies ist nachteilig. Deshalb ist eine zusätzliche, elastische Rastverbindung zwischen den beiden Halterungsteilen vorgesehen, deren Haltesicherheit aber nicht die von positiv verriegelnden Verschlußgliedern erreicht.

Ausgehend von dem eingangs genannten Stand der Technik liegt der Erfindung daher die Aufgabe zugrunde, den Herstellungs- und Verwendungsaufwand zu verringern. Die Lösung liegt in den Merkmalen des Anspruchs 1.

Demnach besteht die Halterung für langgestreckte Gegenstände aus einem ersten Halterungsteil, der mindestens eine Aufnahmemulde für einen langgestreckten Gegenstand und daneben einen ersten Kupplungsteil aufweist, sowie einem zweiten Halterungsteil, der einen zu dem ersten Kupplungsteil passenden zweiten Kupplungsteil und einen Flügel aufweist, der im Haltezustand sich abdeckend über der Mulde erstreckt. Vorzugsweise sind zwei Mulden und zwei Flügel jeweils gegenüberliegend mit mittig dazwischen angeordneten Kupplungsteilen vorgesehen, damit sich die Kräfte beiderseits ausgleichen. Die Abmessungen sind so getroffen, daß sich der bzw. die Flügel vorgespannt auf den in der Mulde liegenden Gegenstand elastisch auflegt bzw. auflegen. Dadurch wird der Gegenstand innerhalb eines bestimmten Toleranzbereich seines Durchmessers sicher und rüttelfrei gehalten. Die paarige Anordnung ist nicht nur im Hinblick auf den Kräfteausgleich sondern auch deshalb vorteilhaft, weil es viele Anwendungsfälle mit paarig zu verlegenden Rohrleitungen gibt, beispielsweise für Hydraulikzwecke.

Die Kupplungsteile sind so gestaltet, daß durch das Einkuppeln die gewünschte Relativlage der Mulde und des Flügels zustande kommt. Erfindungsgemäß sind die Kupplungsteile als Öffnung und Zapfen ausgebildet, die ineinander drehbar sind. In einer ersten Stellung nehmen die Halterungsteile eine Drehstellung zueinander ein, in welcher der Flügel parallel zu dem zu halternden Rohr liegt. Durch Verdrehung gelangt er in die Haltestellung, in der der Flügel sich auf den Gegenstand vorgespannt auflegt. Nach der Erfindung gelingt dies dadurch, daß formschlüssig zusammenwirkende Vor- und/oder Rücksprünge vorgesehen sind, die in der Montagedrehstellung das Zusammenfügen der Kupplungsteile gestatten, während sie in der Haltedrehstellung, in der der Flügel sich über der Mulde befindet, die Entfernung der Halterungsteile voneinander verhindern. Wenn die Kupplungsteile als Öffnung und Zapfen ausgebildet sind ist zweckmäßigerweise die Öffnung mit mindestens einer, zweckmäßigerweise zwei gegenüberliegenden Randausnehmungen versehen und weist der Zapfen entsprechend einen bzw. zwei Vorsprünge auf, die in der Montagestellung beim Zusammenfügen der Halterungsteile durch die Randausnehmung hindurchgeführt werden können und in der Haltedrehstellung abseits der Randausnehmungen hinter den Öffnungsrand greifen. Sämtliche Abmessungen sind dabei so gewählt, daß die gewünschte Vorspannung des Flügels auf dem langgestreckten Gegenstand vorbestimmten Durchmessers gerade dann zustande kommt, wenn der Zapfenvorsprung hinter den Öffnungsrand greift.

Damit die Halterungsteile sich nicht unbeabsichtigt aus der Haltestellung lösen, können Sicherungseinrichtungen vorgesehen sein, die zweckmäßigerweise als Rasteinrichtung ausgebildet sind, die der Rückdrehung eine Kraftschwelle entgegensetzen, die durch normalerweise im Betrieb auftretende Kräfte nicht überwunden werden kann. Die Rasteinrichtung kann beispielsweise von einer Rampe gebildet sein, die am hinteren Öffnungsrand vorgesehen ist und dem zapfenseitigen Vorsprung bei der einkuppelnden Bewegung eine sanft ansteigende Flanke bietet, die zur eingekuppelten Stellung hin scharf abfällt. Die Rampe kann zum elastischen Spannen der Einrichtung vorgesehen werden.

Bei einem weiteren Merkmal der Erfindung ist der Zapfen hohlgebohrt zur Aufnahme von beispielsweise einer Befestigungsschraube.

Die erfindungsgemäße Halterung besteht zweckmäßigerweise aus elastischem Kunststoff, beispielsweise glasfaserverstärktem Polyamid. Sie kann in unterschiedlichen Größen passend zu unterschiedlichen Rohrdurchmessern angeboten werden. Um sicherzustellen, daß in jedem Anwendungsfall zueinander passende Halterungsteile zur Hand sind, werden die beiden Halterungsteile einstückig durch eine leicht brechbare Materialbrücke hergestellt. Bis zur Verwendung bleiben sie miteinander verbunden und werden erst dann voneinander gelöst.

Die Erfindungen wird im folgenden näher unter Bezugnahme auf das in der Zeichnung dargestellte Ausführungsbeispiel erläutert. Es zeigen:
- Figur 1 und 2: perspektivische Darstellungen der Hal- terung im Herstellungszustand von un- terschiedlichen Seiten,
- Figur 3: eine Seitenansicht der Halterung im An- wendungszustand,
- Figur 4 bis 9: die Halterung in den unterschiedlichen Stellungen des Anwendungsfalls und

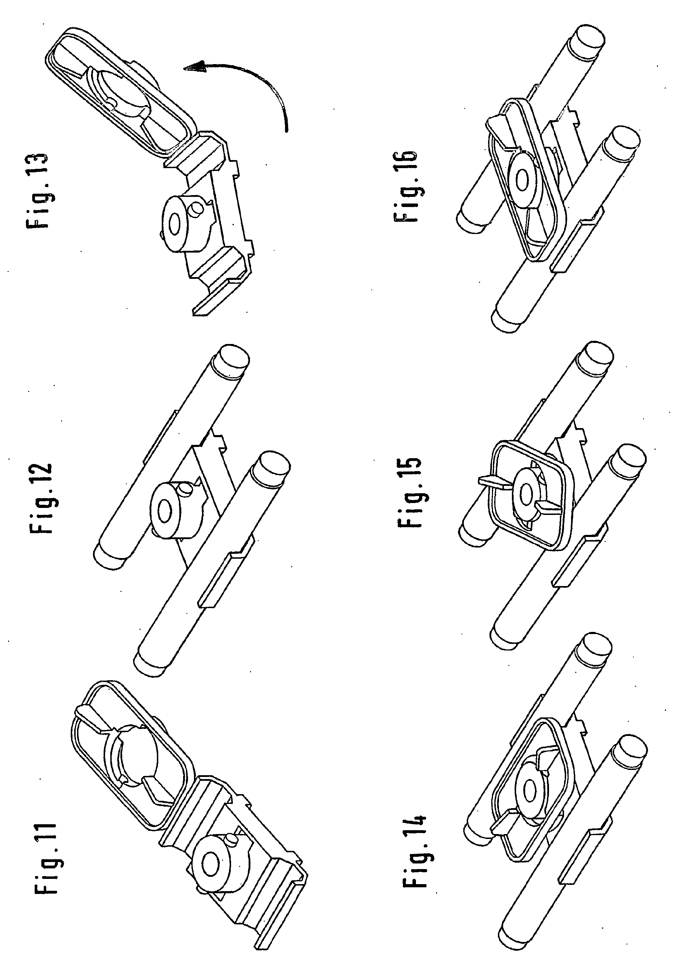

- Figur 10 Figur 11 bis 16: eine alternative Ausführungsform in ähnlicher Darstellung wie die Figuren 4 bis 9 die Halterung der Fig. 10 in den unterschiedlichen Stellungen des Anwendungsfalls.

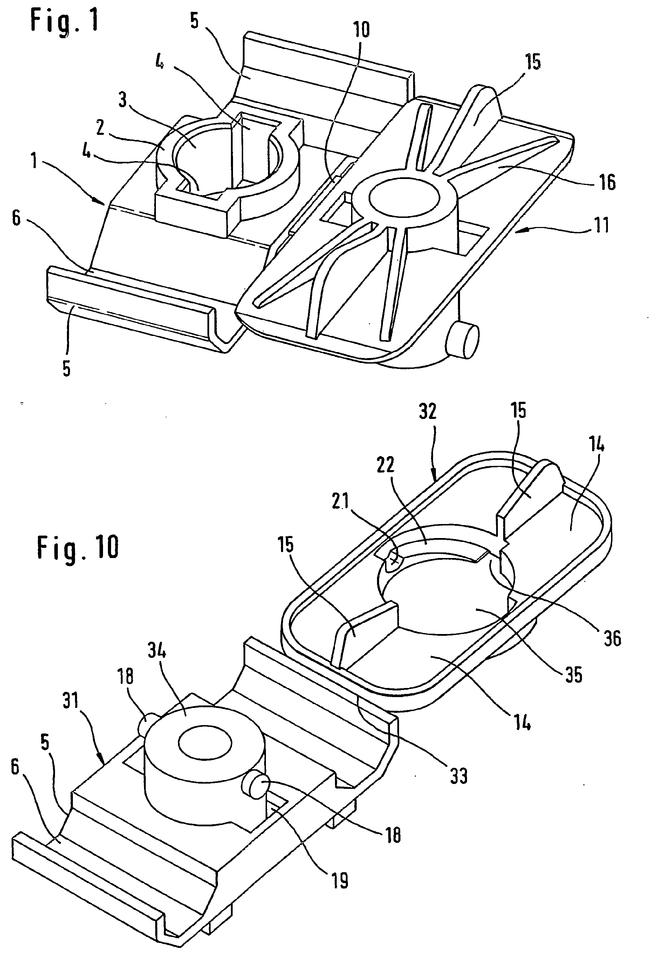

In der Ausführungsform gemäß Fig. 1 bis 9 weist der erste Halterungsteil 1 einstückig in der Mitte eine stabile Hülse 2 auf, deren Länge nicht wesentlich geringer als ihr innerer Durchmesser ist. Die darin gebildete Öffnung 3 weist auf gegenüberliegenden Seiten Nuten 4 auf.

Seitlich des die Hülse 2 enthaltenden Mittelteils des ersten Halterungsteils 1 befinden sich in symmetrischer Anordnung Seitenteile 5, in denen die Mulden 6 ausgebildet sind. Dabei handelt es sich um durchgehende, parallele Vertiefungen, deren äußere Seitenwände 7 das Entweichen der darin gehaltenen Rohre verhindert. Die Seitenteile 5 sind aus vergleichsweise dünnem Material hergestellt, das zwar zur Aufnahme der erforderlichen Kräfte in der Lage ist, aber elastisch nachgeben kann, um Durchmesserabweichungen der zu haltenden Rohre vom Standarddurchmesser Rechnung zu tragen.

Im Lieferzustand ist mit dem ersten Halterungsteil 1 über eine dünne, leicht zerstörbare Materialbrücke 10 der zweite Halterungsteil 11 verbunden, der mittig einen hohlen Zapfen 12 aufweist, dessen Außendurchmesser mit Spiel in die Öffnung 3 der Hülse 2 des ersten Halterungsteils 1 paßt und darin drehbar ist. Die Bohrung 13 innerhalb des Zapfens 12 dient zur Befestigung der Anordnung an einer haltenden Struktur, beispielsweise einer Wand.

In einer lotrecht zur Achse des Zapfens 12 liegenden Ebene weist der zweite Halterungsteil 11 zwei symmetrisch angeordnete Flügel 14 auf, deren Oberfläche auf der Seite, auf der sich auch der Zapfen 12 befindet, im wesentlichen eben ist. Auf der anderen Seite sind die Flügel 14 mit zwei symmetrisch angeordneten, hohen Rippen 15 versehen, die als Drehgriff zum Drehen dieses Halterungsteils dienen. Außerdem können Verstärkungsrippen 16 vorgesehen sein.

Am freien Ende des Zapfens 12 befinden sich symmetrisch zwei seitliche Vorsprünge 18, deren Größe etwas geringer ist als das lichte Maß der Nuten 4, so daß beim Durchgang des Zapfens durch die Öffnung 3 die Vorsprünge 18 durch die Nuten 4 hindurchgeführt werden können. Die Fläche der Flügel 4 enthält in der axialen Projektion der Vorsprünge 18 Ausschnitte 19, die keine Bedeutung für die Halterungsfunktion haben, sondern nur dazu dienen, die Formung der Vorsprünge 18 in einer zweiteiligen Form zu erlauben.

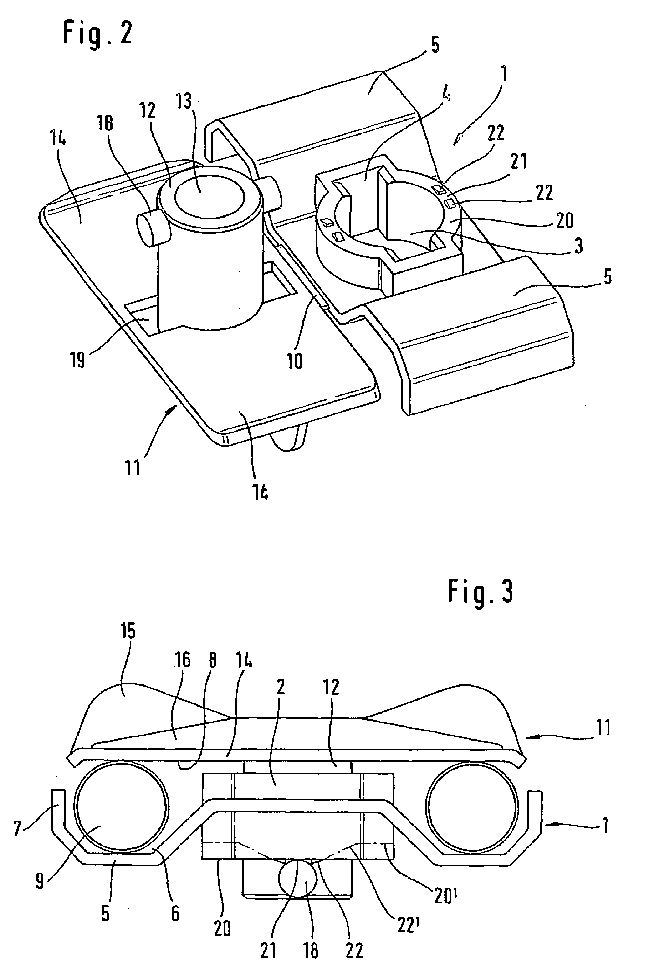

Der Abstand der Vorsprünge 18 von der Oberfläche der Flügel 14 und die Höhe der Hülse 2 im Verhältnis zu den Seitenteilen 5 sind so dimensioniert, daß sich in der in Figur 3 dargestellten Haltestellung der Halterung, in welcher die Vorsprünge 18 gerade hinter den Öffnungsrand 20 der Hülse 2 fassen, zwischen dem Boden der Mulde 6 und der ihr zugewendeten Fläche 8 der Flügel 14 ein Abstand einstellt, der wenig geringer ist als der Durchmesser der zu haltenden Gegenstände 9, so daß diese bei entsprechender elastischer Verformung der Halterung mit einer vorbestimmten Kraft gehalten werden.

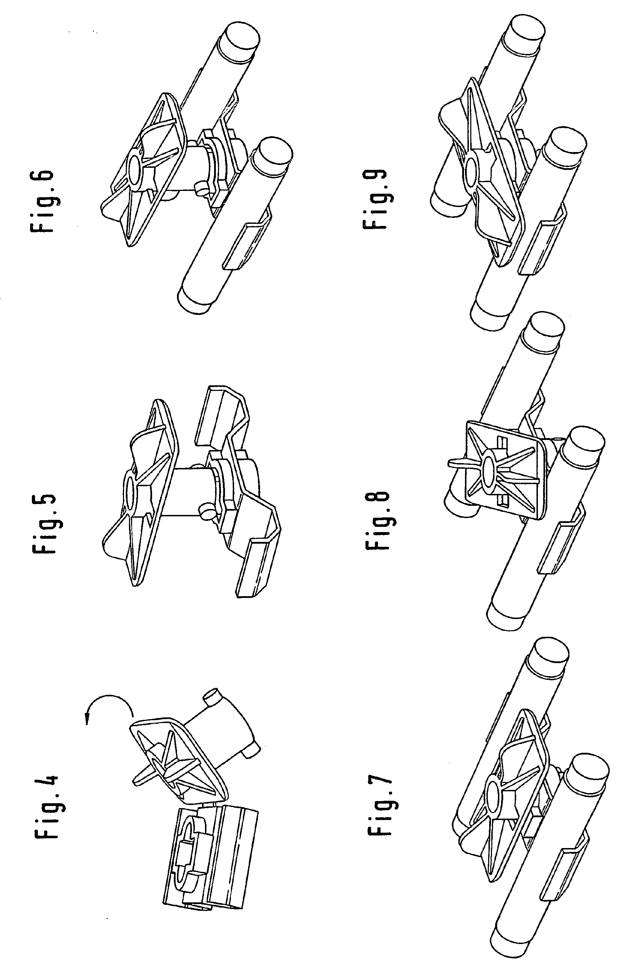

Figur 4 bis 9 veranschaulichen den Verwendungsvorgang. Zunächst (Figur 4) werden die Halterungsteile durch Brechen der Brücke 10 voneinander gelöst. Sodann (Figur 5 und 6) werden sie mit einander und mit den zu haltenden Gegenständen zusammengefügt. Die Kupplungsteile werden ineinander geschoben (Figur 7) und gedreht (Figur 8) bis sie nach einer Drehung um 90° (Figur 9) die vorgesehene Haltestellung erreicht haben, in der die Vorsprünge 18 nach dem Passieren der Öffnung 3 und der Nuten 4 hinter den Öffnungsrand 20 fassen. Der Öffnungsrand 20 und die Vorsprünge 18 bilden ein Verschlußgliederpaar. An die Stelle des Öffnungsrands kann auch ein beliebiger Hinterschnitt treten.

Die Halterungsteile werden aus einem Material gefertigt, das einerseits eine leichte Formgebung erlaubt und andererseits die langdauernde, elastische Aufnahme der Haltekräfte ermöglicht, beispielsweise werden sie aus glasfaserverstärktem Polyamid im Spritzgießverfahren hergestellt.

Damit das Verschlußgliederpaar, nämlich die Vorsprünge 18 und der Öffnungsrand 20, sich nicht unbeabsichtigt aus der Haltestellung zurückdrehen kann, ist eine Rasteinrichtung vorgesehen. Am Öffnungsrand 20 sind beiderseits der Stelle 21, an der sich ein Vorsprung 18 in der Haltedrehstellung befinden soll, Rampen 22 vorgesehen, die der Stelle 21 ihre steilen Flanken zuwenden und auf der anderen Seite schwach geneigt sind. Beim einkuppelnden Drehen der Halterungsteile gleiten die Vorsprünge 18 leicht über die schwach geneigten Flanken hinweg, während sie in der Gegenrichtung die steilen Flanken entgegen der elastischen Kraft überwinden müssen, durch die sie in Anlage an dem Öffnungsrand 20 gehalten werden. Die Rampen 22 sind so hoch, daß während der normalen Benutzung nicht damit gerechnet zu werden braucht, daß Drehkräfte auftreten, durch die die Kupplung gelöst werden könnte.

In dem in Figur 3 mit durchgezogenen Linien gezeigten Ausführungsbeispiel ist vorausgesetzt, daß beim Einschieben des Zapfens 12 in die Hülse 2 eine so große axiale Kraft ausgeübt wird, daß die Betriebsverformung der Halterung erreicht wird und die Vorsprünge 18 bei der nun folgenden Verdrehung hinter den Öffnungsrand 20 greifen können. Eine leichtere Montage kann mit der Ausführung erreicht werden, die mit strichpunktierten Linien angedeutet ist. Dabei ist der Öffnungsrand 20' in der Nachbarschaft der Nuten 4 niedriger ist, so daß er von den Vorsprüngen 18 ohne besondere Kraftausübung erreicht werden kann. Zwischen diesem niedrigeren Rand 20' und der Raststelle 21 liegen stark ansteigende Rampen 22'. In diesem Fall wird die axiale Verspannung der Halterungsteile durch die beim Verdrehen derselben aufgewendete Drehkraft aufgebracht.

In der Ausführungsalternative gemäß Fig. 10 sind der die Aufnahmemulden 6 bildende Halterungsteil 31 und der die Flügel 14 bildende Halterungsteil 32 über eine zerstörbare, dünne Materialbrücke 33 miteinander verbunden. Vor der Verwendung können sie voneinander getrennt werden. Es sind aber unter anderem auch folgende Reihenfolgen möglich:
- Vorbestücken, Anschrauben, Trennen, Schließen
- Anschrauben, Bestücken, Trennen, Schließen.

Im Unterschied zur ersten Ausführungsform ist der Zapfen 34 an dem die Mulden bildenden Halterungsteil 31 angeordnet, während die Öffnung 35 an dem die Flügel 14 bildenden Halterungsteil 32 vorgesehen ist. Die Öffnung 35 enthält an gegenüberliegenden Stellen Randöffnungen 36, die den Nuten 4 des zuvor erläuterten Ausführungsbeispiels entsprechen, in dem sie einen Durchlaß bilden für die Vorsprünge 18 des Zapfens 34. Daran schließt sich jeweils eine Rampe 22 an, die zu einer vertieften Stelle 21 führt. Diese Rampen 22 bilden zusammen mit den Vorsprüngen 18 das Verschlußgliederpaar, das die beiden Halterungsteile 31, 32 in der montierten Stellung sichert. Dabei wird die Montagestellung durch elastisches Einrasten der Vorsprünge 18 in die vertiefte Stelle 21 gesichert. Die elastische Kraft für die Einrastfunktion kommt dadurch zustande, daß die Halterungsteile 31, 32 und insbesondere ihre Mulden 5 und Flügel 14 elastisch und so bemessen sind, dass sie den aufzunehmenden Gegenständen 9 einen Raum zur Verfügung stellen, dessen Weite etwas geringer ist als deren Durchmesser.

Die Montage vollzieht sich in derselben Weise, wie zuvor beschrieben. Der untere Halterungsteil 31 wird mit den zu haltenden Gegenständen zusammengefügt, dann wird der Halterungsteil 32 aufgesetzt, und zwar in einer Richtung, die parallel zu den Gegenständen verläuft. Dabei durchdringt der Zapfen 34 mit den Vorsprüngen 18 die Öffnung 35 und 36. Wenn der Halterungsteil 32 nun im Uhrzeigersinn um 90° gedreht wird, gleiten die Vorsprünge 18 an den Rampen 22 entlang, bis sie die vertieften Raststellen 21 erreichen. Die gegenseitige Montage der Halterungsteile 31, 32 ist damit beendet. Sie können nun nach Belieben an einer Tragstruktur befestigt werden. Im Unterschied zur ersten Ausführungsform ist die Befestigung der Gegenstände nicht nur nach der Montage der zu haltenden Gegenstände, sondern auch schon zuvor möglich.

Der Vorteil der Alternativausführung gemäß Fig. 10 besteht darin, daß der Materialbedarf geringer ist und der Halterungsteil 32 insgesamt flacher ausgeführt werden kann.

## Patentansprüche

1. Halterung für langgestreckte Gegenstände vorbestimmten Durchmessers wie Rohre, bestehend aus zwei Halterungsteilen, von denen der erste (1) mindestens eine Aufnahmemulde (6) für einen langgestreckten Gegenstand (9) und der zweite (11) einen im verbundenen Zustand der Halterungsteile (1, 11) sich abdeckend über der Mulde (6) erstreckenden Flügel (14) aufweist und die durch eine Kupplung verbindbar sind, deren mit den Halterungsteilen (1, 11) einstückig verbundene Kupplungsteile (3, 12) als ineinander drehbar geführte Öffnung (3) und Zapfen (12) ausgebildet sind, wobei ein Verschlußgliederpaar (4, 18) vorgesehen ist, das in einer Montage-Drehstellung, in welcher sich der mindestens eine Flügel (14) nicht über der mindestens einen Mulde (6) befindet, offen und in einer Halte-Drehstellung, in der der Flügel (14) sich über der Mulde (6) befindet, geschlossen ist, **dadurch gekennzeichnet, daß** das Verschlußgliederpaar (4, 18) an der Öffnung (3) und dem Zapfen (12) angeordnet ist.

2. Halterung nach Anspruch 1, **dadurch gekennzeichnet, daß** das Verschlußgliederpaar (4, 18) von mindestens einer Randausnehmung (4) an der Öffnung (3) und mindestens einem Randvorsprung (18) an dem Zapfen (12) gebildet ist, der in der Montage-Drehstellung beim Zusammenfügen der Halterungsteile (1, 11) durch die Randausnehmung (4) paßt und in der Halte-Drehstellung abseits der Randausnehmung (4) hinter den Öffnungsrand (20) greift.

3. Halterung nach Anspruch 1 oder 2, **dadurch gekennzeichnet, daß** das Verschlußgliederpaar (4, 18) eine Rasteinrichtung (22) zum Sichern der Halte-Drehstellung aufweist.

4. Halterung nach einem der Ansprüche 1 bis 3, **dadurch gekennzeichnet, daß** an den Halterungsteilen (1, 11) zwei Mulden (6) und zwei Flügel (14) gegenüberliegend mit mittig dazwischen angeordneten Kupplungsteilen (3, 12) vorgesehen sind.

5. Halterung nach einem der Ansprüche 1 bis 4, **dadurch gekennzeichnet, daß** der mindestens eine Flügel zur vorgespannten Auflage auf dem in der Mulde (6) liegenden Gegenstand (9) vorbestimmten Durchmessers bemessen ist und die Halterung elastisch nachgiebig ist.

6. Halterung nach einem der Ansprüche 1 bis 5, **dadurch gekennzeichnet, daß** der Zapfen (12) eine Befestigungsbohrung (13) enthält.

7. Halterung nach einem der Ansprüche 1 bis 6, **dadurch gekennzeichnet, daß** beide Halterungsteile (1, 11) im Herstellungszustand durch eine leicht lösbare Materialbrücke (10) einstückig miteinander verbunden sind.

8. Halterung nach einem der Ansprüche 1 bis 7, **dadurch gekennzeichnet, daß** der Zapfen (12) an dem die mindestens eine Aufnahmemulde (6) aufweisenden Halterungsteil (1) und die Öffnung (3) an dem die mindestens einen Flügel (14) aufweisenden Halterungsteil (11) angeordnet ist.

9. Halterung nach Anspruch 8, **dadurch gekennzeichnet, daß** der den mindestens einen Flügel (14) aufweisende Halterungsteil (11) im wesentlichen flach plattenförmig ist und einen Drehgriff aufweist.

## Claims

1. A holder for elongate objects having a prescribed diameter, such as pipes, comprising two holder parts, of which the first (1) has at least one accommodating depression (6) for an elongate object (9) and the second (11) has a leaf (14), which extends over the depression (6) such that it covers it in the connected state of the holder parts (1, 11), and which two holder parts can be connected by a coupling, whose coupling parts (3, 12), which are connected integrally with the holder parts (1, 11), are in the form of an opening (3) and a pin (12), which can be guided one inside the other in a rotatable manner, a pair of closure elements (4, 18) being provided which is open in a mounting rotation position, in which the at least one leaf (14) is not located over the at least one depression (6), and is closed in a holding rotation position, in which the leaf (14) is located over the depression (6), **characterized in that** the pair of closure elements (4, 18) is arranged at the opening (3) and the pin (12).

2. The holder as claimed in claim 1, **characterized in that** the pair of closure elements (4, 18) is formed by at least one edge cutout (4) at the opening (3) and at least one edge protrusion (18) on the pin (12), which fits through the edge cutout (4) when the holder parts (1, 11) are joined together in the mounting rotation position and engages behind the opening edge (20) on the other side of the edge cutout (4) in the holding rotation position.

3. The holder as claimed in claim 1 or 2, **characterized in that** the pair of closure elements (4, 18) has a latching device (22) for the purpose of securing the holding rotation position.

4. The holder as claimed in one of claims 1 to 3, **characterized in that** two depressions (6) and two leaves (14) are provided opposite one another on the holder parts (1, 11) with coupling parts (3, 12) arranged centrally between them.

5. The holder as claimed in one of claims 1 to 4, **characterized in that** the at least one leaf is dimensioned so as to rest, with prestress, on the object (9) having a prescribed diameter and lying in the depression (6), and the holder is elastically flexible.

6. The holder as claimed in one of claims 1 to 5, **characterized in that** the pin (12) contains a fixing hole (13).

7. The holder as claimed in one of claims 1 to 6, **characterized in that** the two holder parts (1, 11) are connected integrally to one another by an easily detachable material link (10) in the production state.

8. The holder as claimed in one of claims 1 to 7, **characterized in that** the pin (12) is arranged on the holder part (1) having the at least one accommodating depression (6), and the opening (3) is arranged on the holder part (11) having the at least one leaf (14).

9. The holder as claimed in claim 8, **characterized in that** the holder part (11) having the at least one leaf (14) is essentially flat in the form of a plate and has a turning handle.

## Revendications

1. Dispositif de fixation pour des objets allongés ayant un diamètre prédéterminé, tels que des tubes, lequel est formé en deux parties, dont la première partie (1) comporte au moins une cuvette de réception (6) pour un objet allongé (9) et dont la deuxième partie (11) comporte une patte (14) qui, à l'état assemblé des deux parties de fixation (1, 11), vient se placer en recouvrement sur la cuvette (6), et qui peuvent être reliées l'une à l'autre par un couplage dont les parties de couplage (3, 12), reliées d'un seul tenant aux parties de fixation (1, 11), sont réalisées sous la forme d'une ouverture (3) et d'un tenon (12) guidés l'un dans l'autre de manière à pouvoir tourner, sachant qu'il est prévu une paire d'éléments de verrouillage (4, 18) qui est ouverte dans une position rotative de montage, dans laquelle ladite au moins une patte (14) n'est pas située au-dessus de ladite au moins une cuvette (6), et qui est fermée dans une position rotative de fixation, dans laquelle la patte (14) est située au-dessus de la cuvette (6), **caractérisé en ce que** la paire d'éléments de verrouillage (4, 18) est disposée sur l'ouverture (3) et le tenon (12).

2. Dispositif de fixation selon la revendication 1, **caractérisé en ce que** la paire d'éléments de verrouillage (4, 18) est formée par au moins un évidement périphérique (4) au niveau de l'ouverture (3) et au moins une saillie périphérique (18) au niveau du tenon (12), laquelle, dans la position rotative de montage au moment de l'assemblage des deux parties de fixation (1, 11), passe à travers l'évidement périphérique (4) et, dans la position rotative de fixation, s'engage à l'écart de l'évidement périphérique (4) derrière le bord (20) de l'ouverture.

3. Dispositif de fixation selon la revendication 1 ou 2, **caractérisé en ce que** la paire d'éléments de verrouillage (4, 18) comporte un dispositif de blocage (22) pour immobiliser la position rotative de fixation.

4. Dispositif de fixation selon l'une quelconque des revendications 1 à 3, **caractérisé en ce que** sur les parties de fixation (1, 11) sont prévues deux cuvettes (6) et deux pattes (14) situées face à face avec les parties de couplage (3, 12) agencées au milieu entre celles-ci.

5. Dispositif de fixation selon l'une quelconque des revendications 1 à 4, **caractérisé en ce que** ladite au moins une patte est dimensionnée pour se positionner de manière précontrainte sur l'objet (9) à diamètre prédéterminé, disposé dans la cuvette (6), et le dispositif de fixation est élastiquement flexible.

6. Dispositif de fixation selon l'une quelconque des revendications 1 à 5, **caractérisé en ce que** le tenon (12) comporte un perçage de fixation (13).

7. Dispositif de fixation selon l'une quelconque des revendications 1 à 6, **caractérisé en ce que**, à l'état fabriqué, les deux parties de fixation (1, 11) sont assemblées l'une à l'autre d'un seul tenant par un pont de matière (10) facilement détachable.

8. Dispositif de fixation selon l'une quelconque des revendications 1 à 7, **caractérisé en ce que** le tenon (12) est disposé sur la partie de fixation (1) munie de ladite au moins une cuvette (6), et l'ouverture (3) est réalisée sur la partie de fixation (11) munie de ladite au moins une patte (14).

9. Dispositif de fixation selon la revendication 8, **caractérisé en ce que** la partie de fixation (11) munie de ladite au moins une patte (14) a la forme d'une plaque sensiblement plane et comporte une poignée rotative.
